# EUROPEAN PATENT APPLICATION

(11) **EP 4 491 651 A1**
(43) Date of publication of application: **15.01.2025**
(21) Application number: 23766710.0
(22) Date of filing: 02.03.2023
(51) Int. Cl.: C08G 18/72, C08G 18/00, C09D 5/02, C09D 175/04

(54) **WATER DISPERSION TYPE POLYISOCYANATE COMPOSITION, CURING AGENT, AQUEOUS POLYURETHANE RESIN COMPOSITION, 2-LIQUID-CURING TYPE POLYURETHANE RESIN COMPOSITION, AND ARTICLE**

(30) Priority: 07.03.2022 JP 2022034852
(71) Applicant: Mitsui Chemicals, Inc., Tokyo 104-0028 (JP)
(72) Inventor: USUI, Yuta, Shizuoka-shi, Shizuoka 424-0906 (JP); TAKAMATSU, Koji, Shizuoka-shi, Shizuoka 424-0906 (JP)
(74) Representative: Hoffmann Eitle
(86) International application number: PCT/JP2023/007887
(87) International publication number: WO 2023/171534

(57) **Abstract**

A water-dispersed polyisocyanate composition includes a water-dispersed polyisocyanate (A) and a non-water-dispersed polyisocyanate (B). The water-dispersed polyisocyanate (A) contains a reaction product of a first polyisocyanate component (a1) and a hydrophilic active hydrogen component (a2). The hydrophilic active hydrogen component (a2) has a hydrophilic group and an active hydrogen group. The hydrophilic group contains an anionic group and/or a nonionic group. The non-water-dispersed polyisocyanate (B) contains a second polyisocyanate component (b1), and does not contain a reaction product of the second polyisocyanate component (b1) and the hydrophilic active hydrogen component containing a hydrophilic group. A content ratio of the water-dispersed polyisocyanate (A) is 10% by mass or more.

## Description

### TECHNICAL FIELD

The present invention relates to a water-dispersed polyisocyanate composition, a curing agent, an aqueous polyurethane resin composition, a two-component curable polyurethane resin composition, and an article.

### BACKGROUND ART

A polyurethane resin is widely used in various industrial fields. The polyurethane resin includes a reaction product of a polyisocyanate component and a polyol component.

The polyisocyanate component is, for example, prepared as an organic solvent solution. In recent years, it has been required to prepare the polyisocyanate component as a water dispersion liquid in order to improve environmental properties and workability. In other words, the polyisocyanate component which is dispersible in water is required.

As the polyisocyanate component which is dispersible in the water, the following is proposed. That is, a polyisocyanate mixture obtained by a reaction of an isocyanurate group-containing polyisocyanate produced from a 1,6-diisocyanatohexane (HDI) with a monofunctional polyethylene oxide polyether is proposed (ref: for example, Patent Document 1 (Example 1)).

The above-described polyisocyanate mixture contains a polyethylene oxide unit derived from the monofunctional polyethylene oxide polyether. Therefore, the polyisocyanate composition is dispersible in the water.

### Citation List

### Patent Document

Patent Document 1: Japanese Unexamined Patent Publication No. H5-222150

### SUMMARY OF THE INVENTION

### PROBLEM TO BE SOLVED BY THE INVENTION

However, solvent resistance of the polyurethane resin obtained by the above-described polyisocyanate composition is not sufficient in accordance with applications of the polyurethane resin.

The present invention provides a water-dispersed polyisocyanate composition capable of obtaining a polyurethane resin having excellent solvent resistance, a curing agent, an aqueous polyurethane resin composition, a two-component curable polyurethane resin composition, and an article.

### MEANS FOR SOLVING THE PROBLEM

The present invention [1] includes a water-dispersed polyisocyanate composition including a water-dispersed polyisocyanate (A) and a non-water-dispersed polyisocyanate (B), wherein the water-dispersed polyisocyanate (A) contains a reaction product of a first polyisocyanate component (a1) and a hydrophilic active hydrogen component (a2); the hydrophilic active hydrogen component (a2) has a hydrophilic group and an active hydrogen group; the hydrophilic group contains an anionic group and/or a nonionic group; the non-water-dispersed polyisocyanate (B) contains a second polyisocyanate component (b1), and does not contain a reaction product of the second polyisocyanate component (b1) and the hydrophilic active hydrogen component (a2); and a content ratio of the water-dispersed polyisocyanate (A) is 10% by mass or more with respect to the total amount of the water-dispersed polyisocyanate (A) and the non-water-dispersed polyisocyanate (B).

The present invention [2] includes the water-dispersed polyisocyanate composition described in the above-described [1], wherein the content ratio of the water-dispersed polyisocyanate (A) is below 40% by mass with respect to the total amount of the water-dispersed polyisocyanate (A) and the non-water-dispersed polyisocyanate (B).

The present invention [3] includes the water-dispersed polyisocyanate composition described in the above-described [1] or [2], wherein the first polyisocyanate component (a1) contains a derivative of a straight-chain aliphatic polyisocyanate.

The present invention [4] includes the water-dispersed polyisocyanate composition described in any one of the above-described [1] to [3], wherein the second polyisocyanate component (b1) contains a derivative of a straight-chain aliphatic polyisocyanate.

The present invention [5] includes the water-dispersed polyisocyanate composition described in the above-described [4], wherein the second polyisocyanate component (b1) contains an isocyanurate derivative of a straight-chain aliphatic polyisocyanate, the isocyanurate derivative contains an isocyanurate mononuclear, and the content ratio of the isocyanurate mononuclear is 50% by mass or more with respect to the total amount of the isocyanurate derivative.

The present invention [6] includes the water-dispersed polyisocyanate composition described in any one of the above-described [1] to [5], wherein the total amount of an isocyanate group contained in the water-dispersed polyisocyanate (A) and an isocyanate group contained in the non-water-dispersed polyisocyanate (B) is 15 mol or more and 100 mol or less with respect to 1 mol of the hydrophilic group contained in the water-dispersed polyisocyanate (A).

The present invention [7] includes a curing agent including the water-dispersed polyisocyanate composition described in any one of the above-described [1] to [6].

The present invention [8] includes an aqueous polyurethane resin composition including the water-dispersed polyisocyanate composition described in any one of the above-described [1] to [6] and an active hydrogen group-containing compound.

The present invention [9] includes a two-component curable polyurethane resin composition including the curing agent described in the above-described [7] and a main agent containing an active hydrogen group-containing compound.

The present invention [10] includes an article including an object to be coated and a polyurethane layer disposed on a surface of the object to be coated, wherein the polyurethane layer includes a cured product of the aqueous polyurethane resin composition described in the above-described [8].

### EFFECT OF THE INVENTION

The water-dispersed polyisocyanate composition of the present invention includes the water-dispersed polyisocyanate (A) and the non-water-dispersed polyisocyanate (B). Also, the water-dispersed polyisocyanate (A) contains the reaction product of the first polyisocyanate component (a1), and the hydrophilic active hydrogen component (a2) containing the hydrophilic group. In addition, the non-water-dispersed polyisocyanate (B) contains the second polyisocyanate component (b1). In addition, the hydrophilic group contains the anionic group and/or the nonionic group. Then, the content ratio of the water-dispersed polyisocyanate (A) is 10% by mass or more with respect to the total amount of the water-dispersed polyisocyanate (A) and the non-water-dispersed polyisocyanate (B).

Therefore, the water-dispersed polyisocyanate composition of the present invention has excellent water dispersibility. Further, according to the water-dispersed polyisocyanate composition of the present invention, it is possible to obtain the polyurethane resin having excellent solvent resistance.

The aqueous polyurethane resin composition, the curing agent, and the two-component curable polyurethane resin composition of the present invention contain the above-described water-dispersed polyisocyanate composition. Therefore, the aqueous polyurethane resin composition, the curing agent, and the two-component curable polyurethane resin composition of the present invention have the excellent water dispersibility. Further, according to the aqueous polyurethane resin composition and the two-component curable polyurethane resin composition of the present invention, it is possible to obtain the polyurethane resin having the excellent solvent resistance.

Since the article of the present invention includes a cured coating film of the above-described aqueous polyurethane resin composition, it has the excellent solvent resistance.

### DESCRIPTION OF EMBODIMENTS

A water-dispersed polyisocyanate composition includes a water-dispersed polyisocyanate (A) and a non-water-dispersed polyisocyanate (B). The water-dispersed polyisocyanate composition preferably consists of the water-dispersed polyisocyanate (A) and the non-water-dispersed polyisocyanate (B).

The water-dispersed polyisocyanate (A) is a compound having a hydrophilic group and an isocyanate group. More specifically, the water-dispersed polyisocyanate (A) has one or more hydrophilic groups and two or more isocyanate groups in one molecule. Thus, the water-dispersed polyisocyanate (A) is dispersible with respect to water.

The water-dispersed polyisocyanate (A) contains a reaction product of a first polyisocyanate component (a1) and a hydrophilic active hydrogen component (a2).

Examples of the first polyisocyanate component (a1) include polyisocyanate monomers and polyisocyanate derivatives.

Examples of the polyisocyanate monomer include aliphatic polyisocyanates, aromatic polyisocyanates, and araliphatic polyisocyanates.

Examples of the aliphatic polyisocyanate include chain aliphatic polyisocyanates and alicyclic polyisocyanates.

Examples of the chain aliphatic polyisocyanate include chain aliphatic diisocyanates. Examples of the chain aliphatic diisocyanate include trimethylene diisocyanate, tetramethylene diisocyanate, pentamethylene diisocyanate (PDI), hexamethylene diisocyanate (HDI), 1,2-propane diisocyanate, 1,2-butane diisocyanate, 2,3-butane diisocyanate, 1,3-butane diisocyanate, 2,4,4-trimethylhexamethylene diisocyanate, 2,2,4-trimethylhexamethylene diisocyanate, and 2,6-diisocyanate methylcaproate. These may be used alone or in combination of two or more.

Examples of the alicyclic polyisocyanate include alicyclic diisocyanates. Examples of the alicyclic diisocyanate include isophorone diisocyanate (IPDI), norbornene diisocyanate (NBDI), methylenebis(cyclohexyl isocyanate) (H₁₂MDI), and bis(isocyanatomethyl)cyclohexane (H₆XDI). These may be used alone or in combination of two or more.

Examples of the aromatic polyisocyanate include aromatic diisocyanates. Examples of the aromatic diisocyanate include tolylene diisocyanate (TDI), diphenylmethane diisocyanate (MDI), toluidine diisocyanate (TODI), paraphenylene diisocyanate, and naphthalene diisocyanate (NDI). These may be used alone or in combination of two or more.

Examples of the araliphatic polyisocyanate include araliphatic diisocyanates. Examples of the araliphatic diisocyanate include xylylene diisocyanate (XDI) and tetramethylxylylene diisocyanate (TMXDI). These may be used alone or in combination of two or more.

The polyisocyanate derivative is, for example, a modified product obtained by modifying the above-described polyisocyanate monomer by a known method. Examples of the polyisocyanate derivative include multimers, isocyanurate derivatives, allophanate derivatives, biuret derivatives, uretdione derivatives, polyol adducts, urea derivatives, oxadiazinetrione derivatives, and carbodiimide derivatives. These polyisocyanate derivatives may be used alone or in combination of two or more.

As the polyisocyanate derivative, preferably, an isocyanurate derivative and an allophanate derivative are used.

The isocyanurate derivative is, as described later, a derivative containing an isocyanurate group (isocyanurate ring). Also, the isocyanurate derivative may further contain an allophanate group as needed. That is, the polyisocyanate derivative may be also an isocyanurate derivative composition containing the isocyanurate derivative and the allophanate derivative. In the isocyanurate derivative composition, a content ratio of the allophanate group is, for example, below 50% by mass, preferably below 45% by mass, more preferably below 40% by mass with respect to the total amount of the isocyanurate group and the allophanate group (hereinafter, the same applies).

The allophanate derivative is a derivative containing the allophanate group. Also, the allophanate derivative may further contain the isocyanurate group as needed. That is, the polyisocyanate derivative may be also an allophanate derivative composition containing the allophanate derivative and the isocyanurate derivative. In the allophanate derivative composition, the content ratio of the isocyanurate group is, for example, below 50% by mass, preferably below 45% by mass, more preferably below 40% by mass with respect to the total amount of the isocyanurate group and the allophanate group (hereinafter, the same applies).

As the first polyisocyanate component (a1), preferably, a straight-chain aliphatic polyisocyanate and/or a derivative thereof are/is used, more preferably, a derivative of a straight-chain aliphatic polyisocyanate is used. Further, as the straight-chain aliphatic polyisocyanate, from the viewpoint of water dispersibility, preferably, a pentamethylene diisocyanate (PDI) and a hexamethylene diisocyanate (HDI) are used, more preferably, a hexamethylene diisocyanate (HDI) is used. Further, as the derivative, from the viewpoint of the water dispersibility, preferably, an isocyanurate derivative and an allophanate derivative are used, more preferably, an isocyanurate derivative is used.

In other words, as the first polyisocyanate component (a1), from the viewpoint of the water dispersibility, preferably, an isocyanurate derivative of a pentamethylene diisocyanate (PDI) and an isocyanurate derivative of a hexamethylene diisocyanate (HDI) are used.

The isocyanurate derivative contains a polymolecular product of the isocyanurate. Examples of the polymolecular product include isocyanurate mononuclear (trimoleculear product), isocyanurate dinuclear (pentamolecular product), isocyanurate trinuclear (heptamolecular product), and isocyanurate tetranuclear (nonamolecular product). These may be used alone or in combination of two or more.

The isocyanurate n-molecular product (n: natural number) shows the derivative in which a polyisocyanate monomer of n-molecules (n: natural number) is bonded via the isocyanurate group (isocyanurate ring).

The isocyanurate derivative can be obtained by the known method. For example, the polyisocyanate monomer is subjected to an isocyanuration reaction under the presence of a known isocyanuration catalyst. Reaction conditions may be appropriately set in accordance with its purpose and applications. Thus, the isocyanurate derivative is obtained.

Further, the polyisocyanate monomer may be also modified by known alcohols before the isocyanurattion reaction as needed. Further, after the isocyanuration reaction, the reaction product may be also modified by the known alcohols. In such a case, the allophanate derivative may be contained in the isocyanurate derivative. That is, the isocyanurate derivative composition containing the allophanate derivative and the isocyanurate derivative may be obtained.

Further, the unreacted polyisocyanate monomer may be also separated from a reaction product solution after the isocyanuration reaction as needed. Examples of a separation method include a distillation method and an extraction method, and preferably, a distillation method is used. An example of the distillation method includes thin film distillation. Distillation conditions are appropriately set in accordance with its purpose and applications.

In the first polyisocyanate component (a1), the isocyanurate derivative contains, for example, the isocyanurate mononuclear (trimolecular product) consisting of the polyisocyanate monomer of three molecules (and, the alcohols to be blended as needed).

In the first polyisocyanate component (a1), the content ratio of the isocyanurate mononuclear can be determined as an area ratio (GPC area ratio) in a gel permeation chromatogram of the isocyanurate derivative. The GPC area ratio of the isocyanurate mononuclear shows a ratio of the area of the peak corresponding to the isocyanurate mononuclear to the area of the total peak in the gel permeation chromatogram of the isocyanurate derivative.

More specifically, the GPC area ratio of the isocyanurate mononuclear is calculated by the following method. That is, the isocyanurate derivative is measured by gel permeation chromatography equipped with a differential refractometer, thereby obtaining a chromatogram. The ratio (area ratio) of the area of the peak corresponding to the isocyanurate mononuclear with respect to the area of the total peak in the chromatogram is calculated. The area ratio is the GPC area ratio of the isocyanurate mononuclear.

The peak corresponding to the isocyanurate mononuclear differs in accordance with the kind of the isocyanurate derivative.

For example, in the isocyanurate derivative of the hexamethylene diisocyanate (HDI), the peak corresponding to the isocyanurate mononuclear is the peak having a peak top within a range of a molecular weight (number average molecular weight) of 550 or more and below 650 in terms of polystyrene.

Further, for example, in the isocyanurate derivative of the pentamethylene diisocyanate (PDI), the peak corresponding to the isocyanurate mononuclear is the peak having the peak top within the range of the molecular weight (number average molecular weight) of 450 or more and below 550 in terms of polystyrene.

From the viewpoint of the water dispersibility and solvent resistance, in the chromatogram of the isocyanurate derivative as the first polyisocyanate component (a1), the GPC area ratio of the isocyanurate mononuclear (mononuclear area ratio) is, for example, 30% or more, preferably 40% or more, more preferably 50% or more, further more preferably 60% or more, particularly preferably 65% or more. In addition, in the chromatogram of the isocyanurate derivative as the first polyisocyanate component (a1), the GPC area ratio of the isocyanurate mononuclear is, for example, 90% or less, preferably 85% or less, more preferably 80% or less, further more preferably 75% or less.

In other words, from the viewpoint of the water dispersibility and the solvent resistance, the content ratio of the isocyanurate mononuclear is, for example, 30% by mass or more, preferably 40% by mass or more, more preferably 50% by mass or more, further more preferably 60% by mass or more, particularly preferably 65% by mass or more with respect to the total amount of the isocyanurate derivative as the first polyisocyanate component (a1). Further, the content ratio of the isocyanurate mononuclear is, for example, 90% by mass or less, preferably 85% by mass or less, more preferably 80% by mass or less, further more preferably 75% by mass or less with respect to the total amount of the isocyanurate derivative as the first polyisocyanate component (a1).

In addition, in the first polyisocyanate component (a1), the isocyanurate derivative may further contain the isocyanurate dinuclear (pentamolecular product) consisting of the polyisocyanate monomer of five molecules (and, the alcohols to be blended as needed). Further, the isocyanurate derivative may further contain an isocyanurate tri- or more nuclear (hepta- or more molecular product) consisting of the polyisocyanate monomer of seven or more molecules (and, the alcohol to be blended as needed). The content ratio of these is appropriately set in accordance with its purpose and applications.

The hydrophilic active hydrogen component (a2) has a hydrophilic group and an active hydrogen group. More specifically, the hydrophilic active hydrogen component (a2) has one or more hydrophilic groups and one or more active hydrogen groups in one molecule. Examples of the hydrophilic group include anionic groups and nonionic groups. That is, the hydrophilic group includes the anionic group and/or the nonionic group.

Examples of the anionic group include carboxylic acid groups, sulfonic acid groups, and phosphoric acid groups. Examples of the nonionic group include polyoxyethylene groups. Examples of the active hydrogen group include hydroxyl groups, amino groups, and mercapto groups. As the active hydrogen group, preferably, a hydroxyl group and an amino group are used.

More specifically, examples of the hydrophilic active hydrogen component (a2) include anionic group-containing active hydrogen compounds and nonionic group-containing active hydrogen compounds.

Examples of the anionic group-containing active hydrogen compound include carboxylic acid group-containing active hydrogen compounds, sulfonic acid group-containing active hydrogen compounds, and phosphoric acid group-containing active hydrogen compounds.

The carboxylic acid group-containing active hydrogen compound is a compound containing one or more carboxylic acid groups and one or more active hydrogen groups. Examples of the carboxylic acid group-containing active hydrogen compound include carboxylic acid group-containing monofunctional active hydrogen compounds and carboxylic acid group-containing bifunctional active hydrogen compounds. The carboxylic acid group-containing monofunctional active hydrogen compound has one carboxylic acid group and one active hydrogen group in combination. The carboxylic acid group-containing bifunctional active hydrogen compound has one carboxylic acid group and two active hydrogen groups in combination. Preferably, a carboxylic acid group-containing bifunctional active hydrogen compound is used.

Examples of the carboxylic acid group-containing bifunctional active hydrogen compound include 2,2-dimethylolacetic acid, 2,2-dimethylollactic acid, 2,2-dimethylolpropionic acid, 2,2-dimethylolbutanoic acid, dimethylolheptanoic acid, dimethylolnonanoic acid, 2,2-dimethylolbutyric acid, and 2,2-dimethylolvaleric acid. These may be used alone or in combination of two or more. Preferably, a 2,2-dimethylolpropionic acid is used.

The sulfonic acid group-containing active hydrogen compound is a compound containing one or more sulfonic acid groups and one or more active hydrogen groups. Examples of the sulfonic acid group-containing active hydrogen compound include sulfonic acid group-containing monofunctional active hydrogen compounds and sulfonic acid group-containing bifunctional active hydrogen compounds. The sulfonic acid group-containing monofunctional active hydrogen compound has one sulfonic acid group and one active hydrogen group in combination. The sulfonic acid group-containing bifunctional active hydrogen compound has one sulfonic acid group and two active hydrogen groups in combination. Preferably, a sulfonic acid group-containing monofunctional active hydrogen compound is used.

Examples of the sulfonic acid group-containing monofunctional active hydrogen compound include hydroxyalkanesulfonic acids and aminosulfonic acids. Examples of the hydroxyalkanesulfonic acid include hydroxymethanesulfonic acid, hydroxyethanesulfonic acid, and 3-hydroxypropanesulfonic acid. Examples of the aminosulfonic acid include 2-(cyclohexylamino)-ethanesulfonic acid (CHES) and 3-(cyclohexylamino)-propanesulfonic acid (CAPS). These may be used alone or in combination of two or more. Preferably, an aminosulfonic acid is used, more preferably, a 3-(cyclohexylamino)-propanesulfonic acid is used.

The phosphoric acid group-containing active hydrogen compound is a compound containing one or more phosphoric acid groups and one or more active hydrogen groups. Examples of the phosphoric acid group-containing active hydrogen compound include phosphoric acid group-containing monofunctional active hydrogen compounds and phosphoric acid group-containing bifunctional active hydrogen compounds. The phosphoric acid group-containing monofunctional active hydrogen compound has one phosphoric acid group and one active hydrogen group in combination. The phosphoric acid group-containing bifunctional active hydrogen compound has one phosphoric acid group and two active hydrogen groups in combination. Preferably, a phosphoric acid group-containing monofunctional active hydrogen compound is used.

Examples of the phosphoric acid group-containing monofunctional active hydrogen compound include hydroxyalkylphosphonic acids and aminoalkylphosphonic acids.

These anionic group-containing active hydrogen compounds may be used alone or in combination of two or more. As the anionic group-containing active hydrogen compound, preferably, a carboxylic acid group-containing active hydrogen compound and a sulfonic acid group-containing active hydrogen compound are used, more preferably, a sulfonic acid group-containing active hydrogen compound is used.

Examples of the nonionic group-containing active hydrogen compound include polyoxyethylene compounds. An example of the polyoxyethylene compound includes a compound having the active hydrogen group and at least three consecutive ethylene oxide groups in combination. Examples of the polyoxyethylene compound include one end-capped polyoxyethylene glycols and polyoxyethylene side chain-containing diols.

An example of the one end-capped polyoxyethylene glycol includes an alkoxypolyethylene glycol whose one end is capped by an alkyl group having 1 to 20 carbon atoms. More specifically, examples thereof include methoxypolyoxyethylene glycol and ethoxypolyoxyethylene glycol. The one end-capped polyoxyethylene glycol can be produced by the known method.

An example of the polyoxyethylene side chain-containing diol includes a reaction product of a polyoxyethylene group-containing monoisocyanate and a dialkanolamine. The polyoxyethylene side chain-containing diol can be produced by the known method.

The number average molecular weight of the polyoxyethylene compound is, for example, 200 or more, preferably 300 or more. Further, the number average molecular weight of the polyoxyethylene compound is, for example, 2000 or less, preferably 1000 or less.

These nonionic group-containing active hydrogen compounds may be used alone or in combination of two or more. As the nonionic group-containing active hydrogen compound, preferably, a polyoxyethylene compound is used, more preferably, a one end-capped polyoxyethylene glycol is used.

These hydrophilic active hydrogen components (a2) may be used alone or in combination of two or more.

When the hydrophilic active hydrogen component (a2) is used alone, as the hydrophilic active hydrogen component (a2), preferably, an anionic group-containing active hydrogen compound is used, more preferably, a sulfonic acid group-containing active hydrogen compound is used, further more preferably, an aminosulfonic acid is used.

When the two or more hydrophilic active hydrogen components (a2) are used in combination of two or more, as the hydrophilic active hydrogen component (a2), preferably, an anionic group-containing active hydrogen compound and a nonionic group-containing active hydrogen compound are used in combination.

Preferably, these hydrophilic active hydrogen components (a2) are used in combination of two or more. As the hydrophilic active hydrogen component (a2), more preferably, a sulfonic acid group-containing active hydrogen compound and a polyoxyethylene compound are used in combination, further more preferably, an aminosulfonic acid and a one end-capped polyoxyethylene glycol are used in combination.

When the anionic group-containing active hydrogen compound and the nonionic group-containing active hydrogen compound are used in combination, a combination ratio of these is appropriately set in accordance with its purpose and applications.

For example, a ratio of the anionic group-containing active hydrogen compound is, for example, 1% by mass or more, preferably 3% by mass or more, more preferably 5% by mass or more, further more preferably 7% by mass or more with respect to the total amount of the anionic group-containing active hydrogen compound and the nonionic group-containing active hydrogen compound. Further, the ratio of the anionic group-containing active hydrogen compound is, for example, 90% by mass or less, preferably 50% by mass or less, more preferably 30% by mass or less, further more preferably 10% by mass or less.

In addition, the ratio of the nonionic group-containing active hydrogen compound is, for example, 10% by mass or more, preferably 50% by mass or more, more preferably 70% by mass or more, further more preferably 90% by mass or more with respect to the total amount of the anionic group-containing active hydrogen compound and the nonionic group-containing active hydrogen compound. Further, the ratio of the nonionic group-containing active hydrogen compound is, for example, 99% by mass or less, preferably 97% by mass or less, more preferably 95% by mass or less, further more preferably 93% by mass or less.

In addition, the ratio of the nonionic group-containing active hydrogen compound is, for example, 100 parts by mass or more, preferably 500 parts by mass or more, more preferably 700 parts by mass or more, further more preferably 900 parts by mass or more with respect to 100 parts by mass of the anionic group-containing active hydrogen compound. Further, the ratio of the nonionic group-containing active hydrogen compound is, for example, 2000 parts by mass or less, preferably 1500 parts by mass or less, more preferably 1300 parts by mass or less, further more preferably 1200 parts by mass or less.

The water-dispersed polyisocyanate (A) is produced, for example, by a reaction of the first polyisocyanate component (a1) with the hydrophilic active hydrogen component (a2) described above.

More specifically, the first polyisocyanate component (a1) and the hydrophilic active hydrogen component (a2) are reacted at the ratio at which the free isocyanate group remains. A method for reacting the first polyisocyanate component (a1) with the hydrophilic active hydrogen component (a2) is not particularly limited. For example, the first polyisocyanate component (a1) and the hydrophilic active hydrogen component (a2) are mixed at a predetermined ratio to be heated as needed.

A reaction ratio of the first polyisocyanate component (a1) and the hydrophilic active hydrogen component (a2) is adjusted so that the free isocyanate group remains in the reaction product.

More specifically, an equivalent ratio (active hydrogen group/ NCO) of the active hydrogen group of the hydrophilic active hydrogen component (a2) to the isocyanate group of the first polyisocyanate component (a1) is, for example, 0.30 or less, preferably 0.20 or less. Further, the equivalent ratio (active hydrogen group/ NCO) of the active hydrogen group of the hydrophilic active hydrogen component (a2) to the isocyanate group of the first polyisocyanate component (a1) is, for example, 0.01 or more, preferably 0.10 or more.

A mixing ratio of the hydrophilic active hydrogen component (a2) is, for example, 10 parts by mass or more, preferably 20 parts by mass or more, more preferably 25 parts by mass or more with respect to 100 parts by mass of the first polyisocyanate component (a1). In addition, the mixing ratio of the hydrophilic active hydrogen component (a2) is, for example, 70 parts by mass or less, preferably 60 parts by mass or less, more preferably 55 parts by mass or less with respect to 100 parts by mass of the first polyisocyanate component (a1).

The reaction conditions of the first polyisocyanate component (a1) and the hydrophilic active hydrogen component (a2) are appropriately set as long as it does not inhibit the excellent effect of the present invention. More specifically, the environmental conditions are an inert atmosphere and normal pressure. Further, a reaction temperature is, for example, 50°C or more, preferably 70°C or more. Further, the reaction temperature is, for example, 150°C or less, preferably 110°C or less. Further, reaction time is, for example, 0.5 hours or more, preferably 1 hour or more. Further, the reaction time is, for example, 120 hours or less, preferably 72 hours or less.

The completion of the reaction is, for example, confirmed when an amount of isocyanate in a reaction solution does not change. The amount of isocyanate is measured by a titration method or infrared absorption spectrometry.

In addition, when the anionic group-containing active hydrogen compound is used as the hydrophilic active hydrogen component (a2), preferably, a neutralizing agent is added to the reaction solution, thereby forming a salt of the anionic group. That is, the anionic group may not be the salt or may be the salt. Preferably, as the anionic group, a salt of an anionic group is used.

Examples of the neutralizing agent include conventional bases. Specific examples of the base include organic bases and inorganic bases. Examples of the organic base include tertiary amines and secondary amines. Examples of the tertiary amine include trialkylamines and alkanolamines. Examples of the trialkylamine include trimethylamine, triethylamine, and N,N-dimethylcyclohexylamine. Examples of the alkanolamine include dimethylethanolamine, methyldiethanolamine, triethanolamine, and triisopropanolamine. Examples of the secondary amine include heterocyclic amines. An example of the heterocyclic amine includes a morpholine. Examples of the inorganic base include ammonia, alkali metal hydroxide, alkali earth metal hydroxide, and alkali metal carbonate. Examples of the alkali metal hydroxide include lithium hydroxide, sodium hydroxide, and potassium hydroxide. Examples of the alkali earth metal hydroxide include magnesium hydroxide and calcium hydroxide. Examples of the alkali metal carbonate include sodium carbonate and potassium carbonate. These may be used alone or in combination of two or more.

As the neutralizing agent, preferably, an organic base is used, more preferably, a tertiary amine is used, further more preferably, a trialkylamine is used, particularly preferably, an N,N-dimethylcyclohexylamine (DMCHA) is used.

An addition amount of the neutralizing agent is, for example, 0.4 equivalents or more, preferably 0.6 equivalents or more with respect to 1 equivalent of the anionic group. Further, the addition amount of the neutralizing agent is, for example, 1.2 equivalents or less, preferably 1.0 equivalent or less with respect to 1 equivalent of the anionic group.

Thus, the water-dispersed polyisocyanate (A) is obtained.

The content ratio of the isocyanate group of the water-dispersed polyisocyanate (A) is, for example, 15% by mass or more, preferably 20% by mass or more. Further, the content ratio of the isocyanate group of the water-dispersed polyisocyanate (A) is, for example, 35% by mass or less, preferably 30% by mass or less. The content ratio of the isocyanate group is measured in conformity with JIS K-1556 (2006).

The water-dispersed polyisocyanate (A) may also contain an additive. Examples of the additive include antioxidants, co-catalysts, heat-resistant stabilizers, light-resistant stabilizers, mold release agents, plasticizers, anti-blocking agents, pigments, dyes, lubricants, fillers, and anti-hydrolysis agents. These may be used alone or in combination of two or more. An addition ratio and addition timing of the additive are appropriately set in accordance with its purpose and applications.

The non-water-dispersed polyisocyanate (B) is a compound having no hydrophilic group and having the isocyanate group. More specifically, the non-water-dispersed polyisocyanate (B) has two or more isocyanate groups in one molecule. In addition, the non-water-dispersed polyisocyanate (B) does not have the hydrophilic group in one molecule. Thus, the non-water-dispersed polyisocyanate (B) is non-dispersible with respect to the water.

The non-water-dispersed polyisocyanate (B) contains a second polyisocyanate component (b1).

Examples of the second polyisocyanate component (b1) include the above-described polyisocyanate monomers and the above-described polyisocyanate derivatives. Examples of the polyisocyanate monomer include aliphatic polyisocyanates, aromatic polyisocyanates, and araliphatic polyisocyanates. Examples of the polyisocyanate derivative include multimers, isocyanurate derivatives, allophanate derivatives, biuret derivatives, uretdione derivatives, polyol adducts, urea derivatives, oxadiazinetrione derivatives, and carbodiimide derivatives. These may be used alone or in combination of two or more.

As the second polyisocyanate component (b1), preferably, a straight-chain aliphatic polyisocyanate and/or a derivative thereof are/is used, more preferably, a derivative of a straight-chain aliphatic polyisocyanate is used. Further, as the straight-chain aliphatic polyisocyanate, from the viewpoint of the solvent resistance, preferably, a pentamethylene diisocyanate (PDI) and a hexamethylene diisocyanate (HDI) are used, more preferably, a pentamethylene diisocyanate (PDI) is used. Further, as the derivative, from the viewpoint of the water dispersibility, preferably, an isocyanurate derivative and an allophanate derivative are used, more preferably, an isocyanurate derivative is used.

In other words, as the second polyisocyanate component (b1), from the viewpoint of the solvent resistance, preferably, an isocyanurate derivative of the above-described straight-chain aliphatic polyisocyanate is used, more preferably, an isocyanurate derivative of a pentamethylene diisocyanate (PDI) and an isocyanurate derivative of a hexamethylene diisocyanate (HDI) are used.

In the second polyisocyanate component (b1), the isocyanurate derivative contains the polymolecular product of the isocyanurate in the same manner as the isocyanurate derivative in the first polyisocyanate component (a1), and preferably contains the isocyanurate mononuclear (trimolecular product).

As described above, the content ratio of the isocyanurate mononuclear can be determined as the area ratio (GPC area ratio) in the gel permeation chromatogram of the isocyanurate derivative. The GPC area ratio of the isocyanurate mononuclear shows the ratio of the area of the peak corresponding to the isocyanurate mononuclear to the area of the total peak in the gel permeation chromatogram of the isocyanurate derivative.

From the viewpoint of the water dispersibility and the solvent resistance, in the chromatogram of the isocyanurate derivative as the second polyisocyanate component (b1), the GPC area ratio (mononuclear area ratio) of the isocyanurate mononuclear is, for example, 30% or more, preferably 40% or more, more preferably 50% or more, further more preferably 60% or more, particularly preferably 65% or more. In addition, in the chromatogram of the isocyanurate derivative as the second polyisocyanate component (b1), the GPC area ratio of the isocyanurate mononuclear is, for example, 90% or less, preferably 85% or less, more preferably 80% or less, further more preferably 75% or less.

In other words, from the viewpoint of the water dispersibility and the solvent resistance, the content ratio of the isocyanurate mononuclear is, for example, 30% by mass or more, preferably 40% by mass or more, more preferably 50% by mass or more, further more preferably 60% by mass or more, particularly preferably 65% by mass or more with respect to the total amount of the isocyanurate derivative as the second polyisocyanate component (b1). In addition, the content ratio of the isocyanurate mononuclear is, for example, 90% by mass or less, preferably 85% by mass or less, more preferably 80% by mass or less, further more preferably 75% by mass or less with respect to the total amount of the isocyanurate derivative as the second polyisocyanate component (b1).

In addition, in the second polyisocyanate component (b1), the isocyanurate derivative may further contain the isocyanurate dinuclear (pentamoleular product) consisting of the polyisocyanate monomer of five molecules (and, the alcohols to be blended as needed). Further, the isocyanurate derivative may further contain the isocyanurate tri- or more nuclear (hepta- or more molecular product) consisting of the polyisocyanate monomer of seven or more molecules (and, the alcohols to be blended as needed). The content ratio of these is appropriately set in accordance with its purpose and applications.

The non-water-dispersed polyisocyanate (B) does not contain the reaction product of the second polyisocyanate component (b1) and the above-described hydrophilic active hydrogen component (a2). More specifically, the non-water-dispersed polyisocyanate (B) preferably consists of the second polyisocyanate component (b1).

The content ratio of the isocyanate group of the non-water-dispersed polyisocyanate (B) is, for example, 15% by mass or more, preferably 20% by mass or more. Further, the content ratio of the isocyanate group of the non-water-dispersed polyisocyanate (B) is, for example, 35% by mass or less, preferably 30% by mass or less. The content ratio of the isocyanate group is measured in conformity with JIS K-1556 (2006).

The non-water-dispersed polyisocyanate (B) may also contain the additive. Examples of the additive include antioxidants, co-catalysts, heat-resistant stabilizers, light-resistant stabilizers, mold release agents, plasticizers, anti-blocking agents, pigments, dyes, lubricants, fillers, and anti-hydrolysis agents. These may be used alone or in combination of two or more. The addition ratio and the addition timing of the additive are appropriately set in accordance with its purpose and applications.

The water-dispersed polyisocyanate composition is, for example, obtained by mixing the individually prepared water-dispersed polyisocyanate (A) and the non-water-dispersed polyisocyanate (B).

The content ratio of the water-dispersed polyisocyanate (A) is 10% by mass or more, preferably 12% by mass or more, more preferably 15% by mass or more with respect to the total amount of the water-dispersed polyisocyanate (A) and the non-water-dispersed polyisocyanate (B). In addition, the content ratio of the water-dispersed polyisocyanate (A) is, for example, 50% by mass or less, preferably 40% by mass or less, more preferably 35% by mass or less, further more preferably 30% by mass or less with respect to the total amount of the water-dispersed polyisocyanate (A) and the non-water-dispersed polyisocyanate (B).

In addition, the content ratio of the non-water-dispersed polyisocyanate (B) is, for example, 50% by mass or more, preferably 60% by mass or more, more preferably 65% by mass or more, further more preferably 70% by mass or more with respect to the total amount of the water-dispersed polyisocyanate (A) and the non-water-dispersed polyisocyanate (B). In addition, the content ratio of the non-water-dispersed polyisocyanate (B) is 90% by mass or less, preferably 88% by mass or less, more preferably 85% by mass or less with respect to the total amount of the water-dispersed polyisocyanate (A) and the non-water-dispersed polyisocyanate (B).

In addition, it is also possible to adjust the mixing ratio of the water-dispersed polyisocyanate (A) and the non-water-dispersed polyisocyanate (B) in accordance with the ratio of the isocyanate group (total amount) and the hydrophilic group.

From the viewpoint of the water dispersibility and the solvent resistance, preferably, the mixing ratio of the water-dispersed polyisocyanate (A) and the non-water-dispersed polyisocyanate (B) is adjusted. Thus, the ratio of the total amount of the isocyanate group contained in the water-dispersed polyisocyanate (A) and the isocyanate group contained in the non-water-dispersed polyisocyanate (B) (hereinafter, the total amount of the isocyanate group) to the amount of the hydrophilic group contained in the water-dispersed polyisocyanate (A) (hereinafter, the amount of the hydrophilic group) is adjusted within a predetermined range.

More specifically, in the water-dispersed polyisocyanate composition, the total amount of the isocyanate group to 1 mol of the hydrophilic group (isocyanate group/ 1 mol of the hydrophilic group) is, for example, 10 mol or more, preferably 15 mol or more, more preferably 20 mol or more, further more preferably 30 mol or more, particularly preferably 40 mol or more. In addition, in the water-dispersed polyisocyanate composition, the total amount of the isocyanate group to 1 mol of the hydrophilic group (isocyanate group/ 1 mol of the hydrophilic group) is, for example, 150 mol or less, preferably 100 mol or less, more preferably 80 mol or less, furter more preferably 60 mol or less, particularly preferably 50 mol or less.

Thus, the water-dispersed polyisocyanate composition is obtained. The water-dispersed polyisocyanate composition is a composition (composition mixture) including the water-dispersed polyisocyanate (A) and the non-water-dispersed polyisocyanate (B).

The water-dispersed polyisocyanate composition is distinguished from a composition, for example, consisting of the water-dispersed polyisocyanate (A) in which an introduction amount of the hydrophilic group is reduced without containing the non-water-dispersed polyisocyanate (B).

The water-dispersed polyisocyanate composition may also contain the additive. Examples of the additive include antioxidants, co-catalysts, heat-resistant stabilizers, light-resistant stabilizers, mold release agents, plasticizers, anti-blocking agents, pigments, dyes, lubricants, fillers, and anti-hydrolysis agents. These may be used alone or in combination of two or more. The addition ratio and the addition timing of the additive are appropriately set in accordance with its purpose and applications.

In addition, the water-dispersed polyisocyanate composition may be also solid. Also, the water-dispersed polyisocyanate composition may be a solution and/or a dispersion liquid. In the solution and/or the dispersion liquid of the water-dispersed polyisocyanate composition, the solid concentration is, for example, 10% by mass or more, preferably 20% by mass or more. Further, the solid concentration is, for example, 90% by mass or less, preferably 80% by mass or less.

In addition, in the water-dispersed polyisocyanate composition, the isocyanate group may be the free isocyanate group. Further, the isocyanate group may be also blocked by a blocking agent. That is, examples of the isocyanate group include free isocyanate groups and blocked isocyanate groups.

The blocking agent is a compound having an active group which reacts with the isocyanate group (hereinafter, referred to as a block group) and dissociates by heating to regenerate the isocyanate group. Examples of the blocking agent include active methylene-based compounds, active methine-based compounds, imidazole-based compounds, imidazoline-based compounds, pyrimidine-based compounds, guanidine-based compounds, alcohol-based compounds, phenol-based compounds, amine-based compounds, imine-based compounds, oxime-based compounds, carbamate-based compounds, urea-based compounds, acid amide-based compounds, lactam-based compounds, acid imide-based compounds, triazol-based compounds, pyrazol-based compounds, mercaptan-based compounds, and bisulfite. These may be used alone or in combination of two or more. As the blocking agent, preferably, an imidazole-based compound, an imidazoline-based compound, an oxime-based compound, and a pyrazole-based compound are used.

The blocked isocyanate group is formed by reacting the free isocyanate group with the above-described blocking agent.

For example, the free isocyanate group of the water-dispersed polyisocyanate (A) may be also reacted with the block group in the above-described blocking agent in advance. Further, for example, the free isocyanate group of the non-water-dispersed polyisocyanate (B) may be also reacted with the block group of the above-described blocking agent in advance. Further, after mixing the water-dispersed polyisocyanate (A) with the non-water-dispersed polyisocyanate (B), the free isocyanate group of the water-dispersed polyisocyanate composition may be reacted with the block group of the above-described blocking agent.

The equivalent ratio of the free isocyanate group to the block group in the blocking agent is appropriately set in accordance with its purpose and applications. More specifically, the equivalent ratio of the block group to the free isocyanate group (block group/ isocyanate group) is, for example, 0.2 or more, preferably 0.5 or more, more preferably 0.8 or more, further more preferably 1.0 or more. Further, the equivalent ratio of the block group to the free isocyanate group (block group/ isocyanate group) is, for example, 1.5 or less, preferably 1.2 or less, more preferably 1.1 or less.

The reaction conditions of the free isocyanate group and the block group are appropriately set as long as it does not inhibit the excellent effect of the present invention. More specifically, the environmental conditions are the inert atmosphere and the normal pressure. Further, the reaction temperature is, for example, 0°C or more, preferably 20°C or more. In addition, the reaction temperature is, for example, 100°C or less, preferably 80°C or less, more preferably 70°C or less. Further, the reaction time is, for example, 0.5 hours or more, preferably 1.0 hour or more. Further, the reaction time is, for example, 24 hours or less, preferably 12 hours or less.

In addition, all of the above-described reactions may be carried out under solvent-free conditions. In addition, all of the above-described reactions may be also carried out in the presence of the solvent. Examples of the solvent include known organic solvents. In addition, the mixing ratio of the solvent is appropriately set in accordance with its purpose and applications. In addition, when the solvent is used, it is also possible to remove the solvent after the completion of the reaction. Examples of the method for removing the solvent include distillation and extraction.

In the following description, the isocyanate group includes the free isocyanate group and the isocyanate group blocked by the blocking agent.

The content ratio of the isocyanate group of the water-dispersed polyisocyanate composition is, for example, 15% by mass or more, preferably 20% by mass or more. In addition, the content ratio of the isocyanate group of the water-dispersed polyisocyanate composition is, for example, 35% by mass or less, preferably 30% by mass or less. The content ratio of the isocyanate group is measured in conformity with JIS K-1556 (2006).

An average number of isocyanate groups of the water-dispersed polyisocyanate composition is, for example, 2 or more, preferably 2.2 or more. Further, the average number of isocyanate groups of the water-dispersed polyisocyanate composition is, for example, 4.0 or less, preferably 3.5 or less.

In addition, when the water-dispersed polyisocyanate composition contains the anionic group, the content ratio of the anionic group is, for example, 0.1% by mass or more, preferably 0.2% by mass or more, more preferably 0.5% by mass or more, further more preferably 1% by mass or more with respect to the total amount of the water-dispersed polyisocyanate composition. Further, the content ratio of the anionic group is, for example, 10% by mass or less, preferably 5% by mass or less, more preferably 4% by mass or less, further more preferably 3% by mass or less with respect to the total amount of the water-dispersed polyisocyanate composition.

In addition, when the water-dispersed polyisocyanate composition contains the anionic group, an acid value of the water-dispersed polyisocyanate composition is, for example, 1 mgKOH/g or more, preferably 2 mgKOH/g or more, more preferably 3 mgKOH/g or more. In addition, the acid value of the water-dispersed polyisocyanate composition is, for example, 56 mgKOH/g or less, preferably 34 mgKOH/g or less, more preferably 12 mgKOH/g or less.

In addition, when the water-dispersed polyisocyanate composition contains the nonionic group (oxyethylene unit), the content ratio of the nonionic group (oxyethylene unit) is, for example, 0.1% by mass or more, preferably 0.2% by mass or more, more preferably 0.5% by mass or more, further more preferably 1% by mass or more with respect to the total amount of the water-dispersed polyisocyanate composition. Further, the content ratio of the nonionic group (oxyethylene unit) is, for example, 10% by mass or less, preferably 5% by mass or less, more preferably 4% by mass or less, further more preferably 3% by mass or less with respect to the total amount of the water-dispersed polyisocyanate composition.

Then, the above-described water-dispersed polyisocyanate composition includes the water-dispersed polyisocyanate (A) and the non-water-dispersed polyisocyanate (B). Also, the water-dispersed polyisocyanate (A) contains the reaction product of the first polyisocyanate component (a1) and the hydrophilic active hydrogen component (a2) containing the hydrophilic group. In addition, the non-water-dispersed polyisocyanate (B) contains the second polyisocyanate component (b1). In addition, the hydrophilic group contains the anionic group and/or the nonionic group. Then, the content ratio of the water-dispersed polyisocyanate (A) is 10% by mass or more with respect to the total amount of the water-dispersed polyisocyanate (A) and the non-water-dispersed polyisocyanate (B).

Therefore, the above-described water-dispersed polyisocyanate composition has the excellent water dispersibility. Further, according to the above-described water-dispersed polyisocyanate composition, it is possible to obtain the polyurethane resin having the excellent solvent resistance.

Therefore, the above-described water-dispersed polyisocyanate composition is preferably contained in an aqueous polyurethane resin composition.

The aqueous polyurethane resin composition contains the above-described water-dispersed polyisocyanate composition and an active hydrogen group-containing compound. The aqueous polyurethane resin composition may be a one-component curable polyurethane resin composition in which the water-dispersed polyisocyanate composition and the active hydrogen group-containing compound are mixed. Further, the polyurethane resin composition may be a two-component curable polyurethane resin composition in which the water-dispersed polyisocyanate composition and the active hydrogen group-containing compound are individually prepared, and blended at the time of its use. Preferably, the aqueous polyurethane resin composition is the two-component curable polyurethane resin composition.

The two-component curable polyurethane resin composition contains the active hydrogen group-containing compound as a main agent. Further, the two-component curable polyurethane resin composition contains the above-described water-dispersed polyisocyanate composition as a curing agent. In other words, the curing agent is the curing agent of the two-component curable polyurethane resin composition.

The main agent contains, for example, a water dispersion liquid (emulsion) of the active hydrogen group-containing compound.

Examples of the active hydrogen group-containing compound include macropolyols. The macropolyol is an organic compound (polymer) having two or more hydroxyl groups in the molecule and having a relatively high molecular weight. The number average molecular weight of the macropolyol is, for example, above 600, and for example, 20000 or less.

Examples of the macropolyol include polyether polyols, polyester polyols, polycarbonate polyols, polyurethane polyols, epoxy polyols, vegetable oil polyols, polyolefin polyols, acrylic polyols and vinyl monomer-modified polyols. These may be used alone or in combination of two or more.

The water dispersion liquid of the active hydrogen group-containing compound is prepared, for example, by adding the water to the active hydrogen group-containing compound. Also, the water dispersion liquid of the active hydrogen group-containing compound is prepared, for example, by adding the active hydrogen group-containing compound to the water. Further, a known external emulsifier may be added to the water and/or the active hydrogen group-containing compound as needed. Further, the known external emulsifier may be also added to a mixture of the water and the active hydrogen group-containing compound.

In the water dispersion liquid of the active hydrogen group-containing compound, the content ratio of the active hydrogen group-containing compound is appropriately set in accordance with its purpose and applications. For example, the ratio of the active hydrogen group-containing compound (solid content) is, for example, 1% by mass or more, preferably 5% by mass or more with respect to the total amount of the water dispersion liquid. In addition, the ratio of the active hydrogen group-containing compound (solid content) is, for example, 30% by mass or less, preferably 20% by mass or less with respect to the total amount of the water dispersion liquid.

The curing agent contains the above-described water-dispersed polyisocyanate composition. More specifically, the curing agent contains, for example, the water dispersion liquid (emulsion) of the water-dispersed polyisocyanate composition.

The water dispersion liquid of the water-dispersed polyisocyanate composition is prepared, for example, by adding the water to the water-dispersed polyisocyanate composition. Also, the water dispersion liquid of the water-dispersed polyisocyanate composition is also prepared, for example, by adding the water-dispersed polyisocyanate composition to the water. Further, the known external emulsifier may be also added to the water and/or the water-dispersed polyisocyanate composition as needed. Further, the known external emulsifier may be also added to the mixture of the water and the water-dispersed polyisocyanate composition.

In the water dispersion liquid of the water-dispersed polyisocyanate composition, the content ratio of the water-dispersed polyisocyanate composition is appropriately set in accordance with its purpose and applications. For example, the ratio of the water-dispersed polyisocyanate composition (solid content) is, for example, 1% by mass or more, preferably 5% by mass or more with respect to the total amount of the water dispersion liquid. In addition, the ratio of the water-dispersed polyisocyanate composition (solid content) is, for example, 30% by mass or less, preferably 20% by mass or less with respect to the total amount of the water dispersion liquid.

When the water dispersion liquid of the active hydrogen group-containing compound is prepared, the water dispersion liquid of the water-dispersed polyisocyanate composition may not be prepared. In other words, the solid content of the water-dispersed polyisocyanate composition may be used as it is.

In addition, when the water dispersion liquid of the water-dispersed polyisocyanate composition is prepared, the water dispersion liquid of the active hydrogen group-containing compound may not be prepared. In other words, the solid content of the active hydrogen group-containing compound may be used as it is.

In addition, the aqueous polyurethane resin composition may also contain the additive. Examples of the additive include catalysts, solvents, epoxy resins, coating property improvers, leveling agents, defoaming agents, antioxidants, ultraviolet absorbers, thickeners, anti-settling agents, plasticizers, surfactants, pigments, antifungal agents, fillers, organic particles, and inorganic particles. The additive may be also blended in the main agent. Further, the additive may be also bended in the cutting agent. The mixing amount of the additive is appropriately set in accordance with its purpose and applications.

The main agent and the curing agent are blended at the time of the use of the two-component curable polyurethane resin composition as the aqueous polyurethane resin composition. The mixing ratio of the main agent and the curing agent is adjusted, for example, based on the equivalent ratio (isocyanate group/ hydroxyl group) of the isocyanate group of the water-dispersed polyisocyanate to the active hydrogen group of the active hydrogen group-containing compound.

More specifically, the equivalent ratio (isocyanate group/ active hydrogen group) of the isocyanate group of the water-dispersed polyisocyanate to the active hydrogen group of the active hydrogen group-containing compound is, for example, 0.1 or more, preferably 0.5 or more. In addition, the equivalent ratio (isocyanate group/ active hydrogen group) of the isocyanate group of the water-dispersed polyisocyanate to the active hydrogen group of the active hydrogen group-containing compound is, for example, 5 or less, preferably 3 or less.

Then, the mixture of the main agent and the curing agent (aqueous polyurethane resin composition) is coated onto an arbitrary object to be coated by a known coating method, and dried under arbitrary drying conditions. Examples of the coating method include spray coating, dip coating, spin coating, rotationally sprayed coating, and curtain coat coating.

Thus, a coating film of the aqueous polyurethane resin composition is formed. Thereafter, the coating film is cured by heating. The heating conditions are appropriately set in accordance with the main agent and the curing agent. For example, when the isocyanate group of the curing agent is not blocked by the blocking agent, the heating temperature is, for example, 60°C or more, preferably 80°C or more. Further, the heating temperature is, for example, 150°C or less, preferably 130°C or less. Further, the heating time is, for example, 1 minute or more, preferably 5 minutes or more. Further, the heating time is, for example, 24 hours or less, preferably 12 hours or less.

Thus, the polyurethane resin is obtained as the cured product made of the aqueous polyurethane resin composition. Further, thus, the article including the object to be coated and the polyurethane layer is obtained. More specifically, the article includes the object to be coated and the polyurethane layer disposed on the surface of the object to be coated, and the polyurethane layer includes a cured coating film of the above-described aqueous polyurethane resin composition. Further, the polyurethane resin is aged under the arbitrary conditions as needed.

In addition, when the isocyanate group of the water-dispersed polyisocyanate composition is blocked by the blocking agent, the aqueous polyurethane resin composition is preferably the one-component curable polyurethane resin composition. In such a case, the mixing ratio of the water-dispersed polyisocyanate and the active hydrogen group-containing compound is the same as the mixing ratio of the water-dispersed polyisocyanate and the active hydrogen group-containing compound in the above-described two-component curable polyurethane resin composition.

Then, the aqueous polyurethane resin composition, the curing agent, and the two-component curable polyurethane resin composition described above contain the above-described water-dispersed polyisocyanate composition. Therefore, the aqueous polyurethane resin composition, the curing agent, and the two-component curable polyurethane resin composition described above have the excellent water dispersibility. Further, according to the aqueous polyurethane resin composition, the curing agent, and the two-component curable polyurethane resin composition described above, it is possible to obtain the polyurethane resin having the excellent solvent resistance.

Further, since the above-described article includes the cured coating film of the above-described aqueous polyurethane resin composition, it has the excellent solvent resistance.

Therefore, the water-dispersed polyisocyanate composition, the aqueous polyurethane resin composition, and the article described above are preferably used in, for example, automobile exteriors, surface resin coatings of household electric appliances, and light packaging flexo ink. Examples

Next, the present invention is further described based on Examples below. The present invention is however not limited by Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified.

### 1. GPC Measurement Method

Samples were measured by gel permeation chromatograph (GPC), and the area ratio of the area of each peak to the area of the total peak in the obtained chromatogram (chart) was determined.

Then, when the sample was the HDI derivative, the area ratio of the peak having the peak top in the range of the molecular weight of 550 or more and below 650 in terms of polystyrene was defined as the content ratio (% by mass) of the isocyanurate mononuclear (trimolecular product) in the HDI derivative.

In addition, when the sample was the PDI derivative, the area ratio of the peak having the peak top in the range of the molecular weight of 450 or more and below 550 in terms of polystyrene was defined as the content ratio (% by mass) of the isocyanurate mononuclear (trimolecular product) in the PDI derivative.

In the GPC measurement, approximately 0.03 g of the sample was collected and methylurethanized by methanol, thereafter, the excessive methanol was removed, and 10 mL of tetrahydrofuran was added thereto to be dissolved. Then, the obtained solution was subjected to GPC measurement under the following conditions.

### Analysis device: high-performance GPC device HLC-8320 (manufactured by TOSOH CORPORATION)

Detector: differential refractive index detector
Eluent: tetrahydrofuran
Separation column: following (1) to (4) were connected in series
   (1) TSKgel guardcolum HXL-L 6.0× 40 (manufactured by TOSOH CORPORATION)
   (2) TSKgel G1000HXL 7.8× 300 (manufactured by TOSOH CORPORATION)
   (3) TSKgel G2000HXL 7.8× 300 (manufactured by TOSOH CORPORATION)
   (4) TSKgel G3000HXL 7.8× 300 (manufactured by TOSOH CORPORATION)
Measurement temperature: 40°C
Flow rate: 1 mL/min
Sample injection volume: 100 µL
Analysis device: Eco SEC (manufactured by TOSOH CORPORATION)
· System Correction
Reference material name: Polystyrene

Fabrication method of calibration curve: by using TSKstandard Polystyrene manufactured by TOSOH CORPORATION having different molecular weights, graph of retention time and molecular weight was fabricated.

### 2. Content Ratio of Isocyanate Group and Isocyanurate Conversion Ratio

By using a potentiometric titrator, the content ratio of the isocyanate group was measured by an n-dibutylamine method in conformity with JIS K-1556 (2006).

Further, an isocyanurate conversion ratio of the isocyanate group was calculated by the following formula.

Isocyanurate conversion ratio= 100- (content ratio of isocyanate group after completion of isocyanuration reaction/ content ratio of isocyanate group after urethanization reaction and before isocyanuration reaction× 100)

### 3. Isocyanurate Derivative

### Synthesis Example 1

A four-neck flask equipped with a stirrer, a thermometer, a cooling tube, and a nitrogen introduction tube was charged with 1000.0 g of the 1,6-hexamethylene diisocyanate (HDI) and 1.5 g of an isobutanol, and the charged mixture was subjected to the urethanization reaction at 80°C for 2 hours. The equivalent ratio (NCO/ OH) of the isocyanate group of the 1,6-hexamethylene diisocyanate to the hydroxyl group of the isobutanol was 600.

Next, as the isocyanuration catalyst, 0.52 g of DABCO-TMR (N-(2-hydroxypropyl)-N,N,N-trimethylammonium-2-ethylhexanoate, manufactured by Air Products and Chemicals, Inc.) was added to the reaction product solution, and the mixture was reacted at 80°C to 86°C for 2 hours. Then, it was confirmed by a titration method that 10% by mass of the isocyanate group remaining in the reaction product solution was converted into the isocyanurate group after the above-described urethanization. At this time, 0.60 g of an orthotoluenesulfonate was added to the flask, and the reaction was terminated.

Thereafter, the reaction product solution was distilled with a thin-film distillation device (vacuum degree of 0.05 kPa, temperature of 140°C), thereby removing the unreacted 1,6-hexamethylene diisocyanate. Thus, the isocyanurate derivative of HDI (HDI derivative H-1) was obtained.

The content ratio of the isocyanate group of the HDI derivative H-1 was 22.7% by mass. In addition, in the HDI derivative H-1, the content ratio of the isocyanurate mononuclear (trimolecular product) was 70% by mass.

### Synthesis Example 2 (HDI Derivative H-2)

The 1,6-hexamethylene diisocyanate (HDI) (1000.0 g) and 26.8 g of a 1,3-butanediol were used. An isocyanurate derivative of HDI (HDI derivative H-2) was obtained in the same manner as in Synthesis Example 1 except for this. The equivalent ratio (NCO/ OH) of the isocyanate group of the 1,6-hexamethylene diisocyanate to the hydroxyl group of the 1,3-butanediol was 20.

The content ratio of the isocyanate group of the HDI derivative H-2 was 21.0% by mass. In addition, in the HDI derivative H-2, the content ratio of the isocyanurate mononuclear (trimolecular product) was 40% by mass.

### Synthesis Example 3 (PDI Derivative P-3)

A 1,5-pexamethylene diisocyanate (PDI) (1000.0 g) and 1.6 g of the isobutanol were used. An isocyanurate derivative of PDI (PDI derivative P-3) was obtained in the same manner as in Synthesis Example 1 except for this. The equivalent ratio (NCO/ OH) of the isocyanate group of the 1,5-pentamethylene diisocyanate to the hydroxyl group of the isobutanol was 600.

The content ratio of the isocyanate group of the PDI derivative P-3 was 24.7% by mass. In addition, in the PDI derivative P-3, the content ratio of the isocyanurate mononuclear (trimolecular product) was 70% by mass.

### 4. Water-Dispersed Polyisocyanate (A)

### Production Examples 1 to 7

The first polyisocyanate (a1) and the hydrophilic active hydrogen component (a2) were mixed in the formulation described in Table1. Then, the mixture of these was reacted under dry nitrogen at 80°C to 90°C for 8 hours. Either or both of the following were used as the hydrophilic active hydrogen component (a2).

### 3-(cyclohexylamino)-propanesulfonic acid (CAPS, sulfonic acid group-containing active hydrogen compound)

methoxypolyoxyethylene glycol (MePEG, one end-capped polyoxyethylene glycol) having the number average molecular weight of 400

In addition, when CAPS was used, as the neutralizing agent, the N,N-dimethylcyclohexylamine (DMCHA) was blended into the reaction product in the formulation described in Table 1.

Thus, the water-dispersed polyisocyanate (A) was obtained. The content ratio of the isocyanate group of the water-dispersed polyisocyanate (A) is shown in Table 1.

### 5. Non-Water-Dispersed Polyisocyanate (B)

### Preparation Examples 1 to 3

As described in Table 2, the HDI derivatives H-1 to H-2, or the PDI derivative P-3 was prepared as it is as the non-water-dispersed polyisocyanate (B). The content ratio of the isocyanate group and the content ratio of the mononuclear (trimolecular product) of the non-water-dispersed polyisocyanate (B) are shown in Table 2.

### 6. Polyisocyanate Composition

### Example 1

The water-dispersed polyisocyanate (A) and the non-water-dispersed polyisocyanate (B) were mixed under the dry nitrogen at 60°C in the combination described in Tables 3 to 4. Thus, the polyisocyanate composition was obtained. In Comparative Examples 2 to 4, the water-dispersed polyisocyanate (A) was used alone.

The content ratio of the isocyanate group of the polyisocyanate composition is shown in Tables 3 to 4.

Further, the ratio (isocyanate group/ 1 mol of hydrophilic group) of the total amount of the isocyanate group contained in the water-dispersed polyisocyanate (A) and the isocyanate group contained in the non-water-dispersed polyisocyanate (B) to 1 mol of the hydrophilic group contained in the water-dispersed polyisocyanate (A) was calculated. The results are shown in Tables 3 to 4.

### 7. Evaluation

### (1) Water Dispersibility

The polyisocyanate composition (2.5 g) was slowly added dropwise to 47.5 g of the ion-exchanged water while stirring with a magnetic stirrer (500 rpm), and stirred for 5 minutes. Thereafter, the water dispersion liquid of the obtained polyisocyanate composition was filtered through a 100-mesh. Then, the water dispersibility of the polyisocyanate composition was evaluated based the following criteria.
○: after the termination of stirring, no sediment was confirmed.
△: after the termination of stirring, the sediment was confirmed.
×: polyisocyanate was not dispersed in the water.

### (2) Solvent Resistance

An aqueous acrylic emulsion (solid concentration of 40.0% by mass, hydroxyl value of 100 mgKOH/g) as the main agent, and the polyisocyanate composition as the curing agent were mixed. The equivalent ratio (NCO/ OH) of the isocyanate group in the curing agent to the hydroxyl group in the main agent was 1.0. Then, a liquid mixture of the main agent and the curing agent was stirred for 15 minutes.

Next, the liquid mixture was coated onto a cold rolled steel plate (SPCC, JIS G 3141 (2017)), thereby obtaining a coating film (undried coating film). A coating amount was adjusted so that the dry thickness of the coating film was 20 µm.

Next, the coating film (undried coating film) was dried at 80°C for 30 minutes. Thereafter, the dried coating film was aged at 23°C for 7 days. Thus, the cured coating film was obtained.

Thereafter, a rubbing tester (manufactured by Imoto Machinery Co., Ltd., model: IMC-1507) was used to evaluate the solvent resistance of the cured coating film. Specifically, the surface of the cured coating film was rubbed using an absorbent cotton which was sufficiently impregnated with ethanol. The load was 0.5 kgf. Then, the number of rubbing (reciprocating number) until the coating film disappeared was measured.

### [Table 1]

**Table 1**

| No. | | | Production Ex. 1 | Production Ex. 2 | Production Ex. 3 | Production Ex. 4 | Production Ex. 5 | Production Ex. 6 | Production Ex. 7 |
|---|---|---|---|---|---|---|---|---|---|
| | | | A-1 | A-2 | A-3 | A-4 | A-5 | A-6 | A-7 |
| Mixing Formulation (parts by mass) | First Polyisocyanate Component (a1) | H-1 | 738.5 | - | - | - | 960.3 | 952.7 | 900.0 |
| | | H-2 | - | 738.5 | 866.1 | - | - | - | - |
| | | P-3 | - | - | - | 866.1 | - | - | - |
| | Hydrophilic Active Hydrogen Component (a2) | CAPS | 20.0 | 20.0 | 85.0 | 85.0 | 3.0 | 30.0 | |
| | | MePEG | 230.0 | 230.0 | - | - | 35.0 | - | 100.0 |
| | Neutralizing Agent | DMCHA | 11.5 | 11.5 | 48.9 | 48.9 | 1.7 | 17.3 | - |
| Content Ratio of Isocyanate Group | | % by mass | 14.0 | 12.7 | 16.6 | 19.8 | 19.7 | 21.1 | 19.4 |

### [Table 2]

**Table 2**

| No. | | | Preparation Ex. 1 | Preparation Ex. 2 | Preparation Ex. 3 |
|---|---|---|---|---|---|
| | | | B-1 | B-2 | B-3 |
| Mixing Formulation (parts by mass) | Second Polyisocyanate Component (b1) | H-1 | 100 | - | - |
| | | H-2 | | 100 | - |
| | | P-3 | - | - | 100 |
| Content Ratio of Isocyanate Group | | % by mass | 22.7 | 21.0 | 24.7 |
| Content Ratio of Mononuclear | | % by mass | 70 | 40 | 70 |

### [Table 3]

**Table 3**

| No. | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| | Water-Dispersed Polyisocyante (A) | A-1 | 30 | - | 15 | 40 | 15 | 30 | 30 | - | - | - |
| | | A-2 | - | 30 | - | - | - | - | - | - | - | - |
| | | A-3 | - | - | - | - | - | - | - | 30 | - | - |
| | | A-4 | - | - | - | - | - | - | - | - | 30 | 30 |
| Mixing Formulation (parts by mass) | | A-5 | - | - | - | - | - | - | - | - | - | - |
| | | A-6 | - | - | - | - | - | - | - | - | - | - |
| | | A-7 | - | - | - | - | - | - | - | - | - | - |
| | Non-Water-Dispersed Polyisocyante (B) | B-1 | 70 | 70 | 85 | 60 | - | - | - | 70 | 70 | - |
| | | B-2 | - | - | - | - | - | - | 70 | - | - | - |
| | | B-3 | - | - | - | - | 85 | 70 | - | - | - | 70 |
| Content Ratio of Isocyanate Group | | % by mass | 20.1 | 19.7 | 21.4 | 19.2 | 23.1 | 21.5 | 18.9 | 20.9 | 21.8 | 23.2 |
| Isocyanate Group/1 mol of Hydrophilic Group | | mol | 25.0 | 25.0 | 52.0 | 18.2 | 56.1 | 26.6 | 23.5 | 44.1 | 46.0 | 48.9 |
| Evaluation | | Water Dispersibility | ○ | △ | ○ | △ | ○ | ○ | △ | ○ | ○ | ○ |
| | | Solvent Resistance | 220 | 170 | 240 | 160 | 250 | 230 | 170 | 260 | 260 | 260 |

### [Table 4]

**Table 4**

| No. | | | Comparative Ex. 1 | Comparative Ex. 2 | Comparative Ex. 3 | Comparative Ex. 4 |
|---|---|---|---|---|---|---|
| | Water-Dispersed Polyisocyante (A) | A-1 | 5 | - | - | - |
| | | A-2 | - | - | - | - |
| | | A-3 | - | - | - | - |
| | | A-4 | - | - | - | - |
| Mixing Formulation (parts by mass) | | A-5 | - | 100 | - | - |
| | | A-6 | - | - | 100 | - |
| | | A-7 | - | - | - | 100 |
| | Non-Water-Dispersed Polyisocyante (B) | B-1 | 95 | - | - | - |
| | | B-2 | - | - | - | - |
| | | B-3 | - | - | - | - |
| Content Ratio of Isocyanate Group | | % by mass | 22.3 | 19.7 | 21.1 | 19.4 |
| Isocyanate Group/1 mol of Hydrophilic Group | | mol | 21.4 | 51.4 | 37.9 | 19.5 |
| Evaluation | | Water Dispersibility | × | ○ | ○ | ○ |
| | | Solvent Resistance | - | 150 | 120 | 120 |

The details of abbreviations in Tables are described below.
H-1: isocyanurate derivative of Synthesis Example 1
H-2: isocyanurate derivative of Synthesis Example 2
P-3: isocyanurate derivative of Synthesis Example 3
CAPS: 3-(cyclohexylamino)-propanesulfonic acid, sulfonic acid group-containing active hydrogen compound
MePEG: methoxypolyoxyethylene glycol having a number average molecular weight of 400, one end-capped polyoxyethylene glycol
DMCHA: N,N-dimethylcyclohexylamine, neutralizing agent

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The water-dispersed polyisocyanate composition, the curing agent, the aqueous polyurethane resin composition, the two-component curable polyurethane resin composition, and the article of the present invention are preferably used in automobile exterior fields, surface resin coating fields, and light packaging flexo ink fields.

## Claims

1. A water-dispersed polyisocyanate composition comprising:
a water-dispersed polyisocyanate (A) and a non-water-dispersed polyisocyanate (B), wherein
the water-dispersed polyisocyanate (A) contains
a reaction product of a first polyisocyanate component (a1) and a hydrophilic active hydrogen component (a2);
the hydrophilic active hydrogen component (a2) has a hydrophilic group and an active hydrogen group;
the hydrophilic group contains an anionic group and/or a nonionic group;
the non-water-dispersed polyisocyanate (B) contains
a second polyisocyanate component (b1), and
does not contain a reaction product of the second polyisocyanate component (b1) and the hydrophilic active hydrogen component (a2); and
a content ratio of the water-dispersed polyisocyanate (A) is 10% by mass or more with respect to the total amount of the water-dispersed polyisocyanate (A) and the non-water-dispersed polyisocyanate (B).

2. The water-dispersed polyisocyanate composition according to claim 1, wherein the content ratio of the water-dispersed polyisocyanate (A) is below 40% by mass with respect to the total amount of the water-dispersed polyisocyanate (A) and the non-water-dispersed polyisocyanate (B).

3. The water-dispersed polyisocyanate composition according to claim 1, wherein the first polyisocyanate component (a1) contains a derivative of a straight-chain aliphatic polyisocyanate.

4. The water-dispersed polyisocyanate composition according to claim 1, wherein the second polyisocyanate component (b1) contains a derivative of a straight-chain aliphatic polyisocyanate.

5. The water-dispersed polyisocyanate composition according to claim 4, wherein
the second polyisocyanate component (b1) contains an isocyanurate derivative of a straight-chain aliphatic polyisocyanate,
the isocyanurate derivative contains an isocyanurate mononuclear, and
the content ratio of the isocyanurate mononuclear is 50% by mass or more with respect to the total amount of the isocyanurate derivative.

6. The water-dispersed polyisocyanate composition according to claim 1, wherein
the total amount of an isocyanate group contained in the water-dispersed polyisocyanate (A) and an isocyanate group contained in the non-water-dispersed polyisocyanate (B) is 15 mol or more and 100 mol or less with respect to 1 mol of the hydrophilic group contained in the water-dispersed polyisocyanate (A).

7. A curing agent comprising:
the water-dispersed polyisocyanate composition according to claim 1.

8. An aqueous polyurethane resin composition comprising:
the water-dispersed polyisocyanate composition according to claim 1 and
an active hydrogen group-containing compound.

9. A two-component curable polyurethane resin composition comprising:
the curing agent according to claim 7 and
a main agent containing an active hydrogen group-containing compound.

10. An article comprising:
an object to be coated and a polyurethane layer disposed on a surface of the object to be coated, wherein
the polyurethane layer includes a cured product of the aqueous polyurethane resin composition according to claim 8.
